# EUROPÄISCHE PATENTSCHRIFT

(11) **EP 1 107 910 B1**
(45) Veröffentlichungstag und Bekanntmachung des Hinweises auf die Patenterteilung: **20.11.2002**
(21) Anmeldenummer: 99944466.4
(22) Anmeldetag: 21.08.1999
(51) Int. Cl.: B64D 11/02, E03D 5/00, B60R 15/04, B61D 35/00

(54) **VAKUUMTOILETTENSYSTEM FÜR EIN FAHRZEUG**
VACUUM TOILET SYSTEM FOR A VEHICLE
SYSTEME DE TOILETTES A ASPIRATION POUR VEHICULE

(30) Priorität: 29.08.1998 DE 29815554 U
(43) Veröffentlichungstag der Anmeldung: 20.06.2001
(73) Patentinhaber: AOA Apparatenbau Gauting GmbH, 82131 Gauting (DE)
(72) Erfinder: KARLSSON, Kent, D-82343 Pöcking (DE); KECHELE, Karl, D-86161 Augsburg (DE); DEDEGIL, M., Yavuz, D-76131 Karlsruhe (DE)
(74) Vertreter: Grättinger & Partner (GbR)
(86) Internationale Anmeldenummer: EP9906141
(87) Internationale Veröffentlichungsnummer: WO00012383

(56) Entgegenhaltungen:
- GB-A- 1 288 781
- US-A- 4 871 452
- US-A- 5 326 069

## Beschreibung

Die vorliegende Erfindung betrifft ein Vakuumtoilettensystem für ein Fahrzeug, insbesondere für ein Passagierflugzeug, umfassend eine Mehrzahl von Toiletten, einen Sammelbehälter, ein die Toiletten mit dem Sammelbehälter verbindendes Leitungsnetz und einen strömungstechnisch mit dem Sammelbehälter verbundenen Vakuumgenerator, wobei das Leitungsnetz mindestens ein Hauptrohr und eine Mehrzahl von Zweigrohren umfaßt, über welche die Toiletten an das mindestens eine Hauptrohr angeschlossen sind, die im spitzen Winkel mit einer in Förderrichtung im Hauptrohr gerichteten Komponente in das Hauptrohr einmünden und die benachbart ihrer jeweiligen Einmündung einen Bogen beschreiben.

Ein derartiges Vakuumtoilettensystem ist aus der US-A-4871452 (entsprechend EP-A-0298199) bekannt. Vergleichbare Vakuumtoilettensysteme, bei denen allerdings die Zweigrohre im rechten Winkel in das Hauptrohr einmünden und benachbart ihrer Einmündung in das Hauptrohr gerade ausgeführt sind, sind darüberhinaus in der US-A-5245711 (entsprechend EP-A-0363012 und EP-A-0530859) und der DE-A-4123803 beschrieben. Sämtliche vorstehend angegebenen Vakuumtoilettensysteme arbeiten übereinstimmend derart, daß bei einem nach Benutzung einer Toilette ausgeführten Spülprogramm zunächst eine vorgegebene Menge Spülwasser in die Toilette eingelassen und anschließend das Spülventil für einen kurzen Zeitraum (z.B. 4 Sek.) geöffnet wird. Der Unterdruck im Sammelbehälter und im Leitungsnetz wird dabei, sofern das Vakuumtoilettensystem in einem Flugzeug installiert ist und dieses sich in ausreichender Höhe befindet, durch die Druckdifferenz zwischen dem Kabinendruck und der Umgebung bereitgestellt; bei niedrigeren Flughöhen und am Boden wird der Unterdruck im Sammelbehälter und im Leitungsnetz durch den zu Beginn des Spülprogramms eingeschalteten Vakuumgenerator bereitgestellt. Für Vakuumtoilettensysteme in Land- und Wasserfahrzeugen gilt dies ohnehin.

Sämtliche vorstehend aufgeführten Vakuumtoilettensysteme leiden unter dem Nachteil, daß sich in dem mindestens einen Hauptrohr stromaufwärts der Einmündungen der Zweigrohre Ablagerungen bilden, die die Strömungsverhältnisse beeinträchtigen und deren Entfernung mit einem erheblichen Wartungsaufwand verbunden ist.

Hieraus leitet sich die der vorliegenden Erfindung zugrundeliegende Aufgabenstellung ab, die darin besteht, ein Vakuumtoilettensystem der eingangs genannten Art zu schaffen, bei dem zur Erhaltung optimaler Strömungsverhältnisse ein geringerer Wartungsaufwand erforderlich ist.

Erfindungsgemäß wird diese Aufgabe dadurch gelöst, daß der Krümmungsmittelpunkt der jeweiligen Mittellinie der gebogenen Abschnitte der Zweigrohre bezogen auf die Förderrichtung im entsprechenden Hauptrohr hinter dem jeweiligen Einmündungspunkt der Mittellinie in das Hauptrohr liegt. Bei dieser Geometrie der Zweigrohre benachbart ihrer jeweiligen Einmündung in das betreffende Hauptrohr läßt sich eine deutlich reduzierte Ausbildung von Ablagerungen in den stromaufwärts der Einmündungen der Zweigrohre in das Hauptrohr gelegenen Abschnitte des Hauptrohres feststellen. Hierbei handelt es sich um eine absolut überraschende Erkenntnis; denn in Anwendung der anerkannten Regeln der Strömungslehre wären bei erfindungsgemäß gestalteten Vakuumtoilettensystemen an sich ungünstigere Strömungsverhältnisse zu erwarten gewesen als im Falle der den nächstkommenden Stand der Technik bildenden US-A-4871452. Eine Erklärung für das sich in Anwendung der vorliegenden Erfindung einstellende Resultat gelingt allenfalls unter Berücksichtigung der drei nachstehend gewürdigten für Vakuumtoilettensysteme charakteristischen Umstände: Bei dem Fördergut handelt es sich nicht um ein Newtonsches Fluid; vielmehr liegt eine Art von Bingham-Charakteristik bei einer hohen Haftung des Förderguts an der Rohrinnenwand vor. Des weiteren sind die Strömungsverhältnisse hochgradig instationär. Und schließlich liegt der im Sammelbehälter und im Leitungsnetz aufgebaute Unterdruck auch in dem stromaufwärts der jeweils betrachteten Einmündung gelegenen Abschnitt des Hauptrohres vor. Auf der Grundlage dieser Prämissen, die bei keinem sonstigen Strömungsfördersystem vorliegen, läßt sich das bei gattungsgemäßen Vakuumtoilettensystemen auftretende Problem dadurch erklären, daß das Fördergut aufgrund seiner Bingham-Charakteristik und unter Einwirkung von zentrifugalen Kräften im - bezogen auf die Förderrichtung im Hauptrohr - hinteren Bereich der Einmündungsöffnung des Zweigrohres in das Hauptrohr eintritt, wo es durch den auch im stromaufwärtigen Abschnitt des Hauptrohres bestehenden Unterdruck und durch instationäre Strömungsverhältnisse zu einer Rückströmung kommt, welche das Fördergut teilweise in den stromaufwärts gelegenen Bereich des Hauptrohres mitreißt. Dort bleibt es dann an der Innenwand des Hauptrohres haften und ist dem weiteren Spülvorgang entzogen. Relativ rasch kommt es dann zu der Ausbildung von Ablagerungen durch das stromaufwärts von der betreffenden Einmündung eines Zweigrohres in das Hauptrohr an der Innenwand des letzteren anhaftenden Fördergut. Der Effekt, der sich bei erfindungsgemäß gestalteten Vakuumtoilettensystemen einstellt, mag seine Erklärung darin finden, daß hier die in den benachbart zu den Einmündungen angeordneten Bogenabschnitten der Zweigrohre wirkenden Zentrifugalkräfte das Fördergut dem stromabwärtigen Bereich der Einmündungsöffnung des betreffenden Zweigrohres in das Hauptrohr zuführen, wo eine Rückströmung nicht mehr so stark ausgeprägt ist.

Indem das Fördergut bei erfindungsgemäßen Vakuumtoilettensystemen somit einer deutlich geringeren Rückströmung in dem Hauptrohr ausgesetzt ist, wird es weitgehend von dem Spülvorgang erfaßt und dem Sammelbehälter zugeführt. Auf diese Weise wird die Ausbildung von Ablagerungen durch an der Innenwand des Hauptrohres anhaftendes Fördergut erheblich verringert.

Eine erste bevorzugte Weiterbildung der Erfindung zeichnet sich dadurch aus, daß der gebogene Abschnitt des Zweigrohres mindestens 90° beträgt. Besonders bevorzugt ist dabei das Zweigrohr über einen Winkelbereich zwischen 90° und 165° gebogen. Im Ergebnis bedeutet dies, daß die Zweigrohre, von den Toiletten kommend, zweckmäßigerweise an dem Hauptrohr vorbeigeführt werden, und zwar besonders vorteilhaft oberhalb des Hauptrohres, um das Einfließen von im Hauptrohr vorhandenen Fördergutansammlungen in das Zweigrohr zu verhindern, um dann nach dem erfindungsgemäß vorgesehenen gebogenen Abschnitt von der gegenüberliegenden Seite in das Hauptrohr einzumünden. In der Praxis bedeutet dies, daß ein Zweigrohr, welches eine - bezogen auf die Strömungsrichtung im Hauptrohr - rechts von dem Hauptrohr angeordnete Vakuumtoilette mit dem Hauptrohr verbindet, von links in letzteres einmündet. Entsprechendes gilt für links von, über bzw. unter dem Hauptrohr angeordnete Vakuumtoiletten, indem hier das entsprechende Zweigrohr von rechts, unten bzw. oben in das Hauptrohr mündet. Auch dies ist vor dem Hintergrund der anerkannten Regeln der Strömungslehre, die zur Vermeidung von Verlusten eine möglichst kurze Leitungsführung vorschreiben, eine durchaus überraschende Erkenntnis.

Eine andere bevorzugte Weiterbildung der Erfindung ist dadurch gekennzeichnet, daß die Toiletten auf einem niedrigeren Niveau angeordnet sind als das Hauptrohr, wobei die Zweigrohre einen Steigleitungsabschnitt umfassen. Insbesondere bei den in diesem Fall vorgesehenen sog. Unterflurtoiletten mit (relativ langen) Steigleitungen erweisen sich die durch die Erfindung erzielbaren Vorteile als besonders ausgeprägt. Zudem führt die in diesem Falle vorgesehene Einmündung der Zweigrohre von oben her in das Hauptrohr (siehe oben) dazu, daß in dem Hauptrohr verbliebene Rückstände nicht in die Zweigrohre zurückfließen können. Jedoch ist die Erfindung keineswegs auf derartige Unterflurtoiletten umfassende Vakuumtoilettensysteme beschränkt; vielmehr zeigen sich auch bei der herkömmlichen Anordnung von Toiletten auf oder oberhalb des Niveaus des Hauptrohres die weiter oben dargelegten Vorteile.

Lediglich zur Klarstellung sei an dieser Stelle angemerkt, daß die Angabe, wonach die Zweigrohre benachbart ihrer jeweiligen Einmündung in das Hauptrohr einen Bogen beschreiben, nicht so zu verstehen ist, daß jedes Zweigrohr unmittelbar angrenzend an seine Einmündung in das betreffende Hauptrohr gebogen ist. Vielmehr können die Zweigrohre auch zwischen den nach der vorliegenden Erfindung vorgesehenen gebogenen Abschnitten und ihrer jeweiligen Einmündung in das Hauptrohr einen geraden Abschnitt aufweisen. Selbst eine geringfügige Gegenbiegung zu dem erfindungsgemäß vorgesehenen Bogen ist unschädlich, da hierdurch die durch die Zentrifugalkräfte im eigentlichen Bogen hervorgerufene Ansammlung des Förderguts keine nennenswerte Änderung erfährt.

Im übrigen sei an dieser Stelle klargestellt, daß der für die vorliegende Erfindung maßgebliche Bogen des Zweigrohres keineswegs als exakter Kreisbogen mit einem einzigen Krümmungsmittelpunkt ausgeführt sein muß. Vielmehr kann sich die Krümmung des Bogens des Zweigrohres durchaus längs dessen Verlaufs ändern. In diesem Falle liegt eine Mehrzahl von Krümmungsmittelpunkten vor. Hier kommt es darauf an, daß zumindest ein Teil der Krümmungsmittelpunkte bezogen auf die Förderrichtung im betreffenden Hauptrohr hinter dem jeweiligen Einmündungspunkt der Mittellinie in das Hauptrohr liegen.

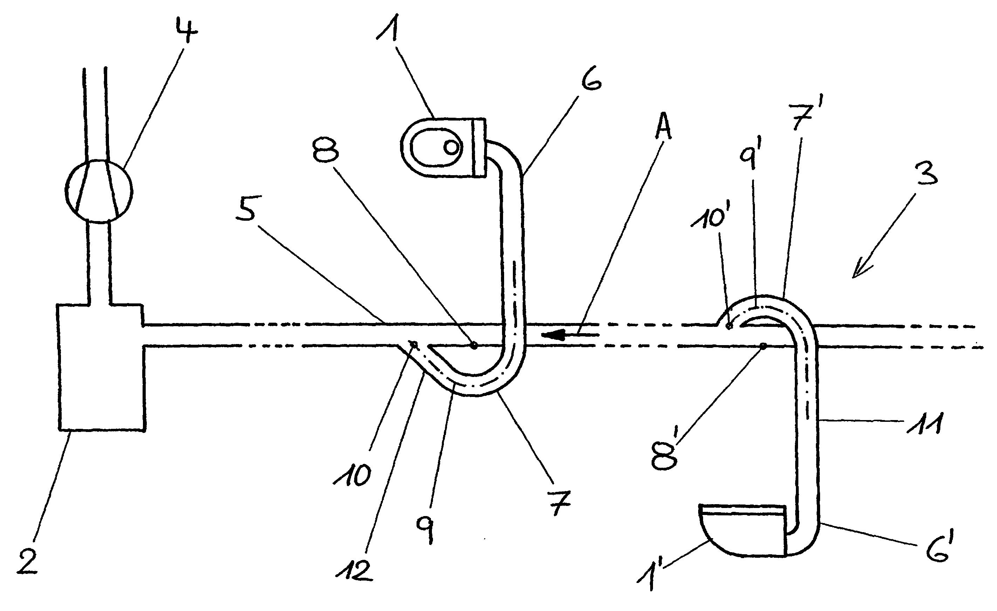

Im folgenden wird die vorliegende Erfindung anhand der Zeichnung näher erläutert. Diese zeigt schematisch eine bevorzugte Ausführungsform eines erfindungsgemäßen Vakuumtoilettensystems, wobei lediglich zwei der Toiletten dargestellt sind. Dabei ist eine Überflurtoilette 1 in Draufsicht und eine Unterflurtoilette 1' in Seitenansicht veranschaulicht.

Das Vakuumtoilettensystem umfaßt in als solches bekannter Weise eine Mehrzahl von Toiletten 1, 1', einen Sammelbehälter 2, ein die Toiletten 1, 1' mit dem Sammelbehälter 2 verbindendes Leitungsnetz 3 und einen strömungstechnisch mit dem Sammelbehälter verbundenen Vakuumgenerator 4. Das Leitungsnetz 3 umfaßt ein Hauptrohr 5 und Zweigrohre 6, 6', über welche die Toiletten 1, 1' an das Hauptrohr 5 angeschlossen sind. Insoweit entspricht, wenn von der bisher nicht gebräuchlichen Unterfluranordnung der Toilette 1' abgesehen wird, das dargestellte Vakuumtoilettensystem dem Stand der Technik, weshalb auf eingehendere Erläuterungen verzichtet wird. Ebenfalls ist verzichtet worden auf die Darstellung allgemein bekannter Merkmale von Vakuumtoilettensystemen wie beispielsweise eine Spülwassereinrichtung und am Ausgang der Toilette angeordnete Spülventile. Auf diese Details kommt es im Rahmen der vorliegenden Erfindung nicht an.

Bedeutsam ist jeweils die Ausgestaltung der Zweigrohre 6, 6'. Diese umfassen jeweils einen Bogen 7 bzw. 7' mit einer solchen Krümmung, daß der Krümmungsmittelpunkt 8 bzw. 8' der jeweiligen Mittellinie 9 bzw. 9' der gebogenen Abschnitte 7 bzw. 7' der Zweigrohre 6 bzw. 6' bezogen auf die Föderrichtung A im Hauptrohr 5 hinter dem jeweiligen Einmündungspunkt 10 bzw. 10' der Mittellinie 9 bzw. 9' in das Hauptrohr liegt. Im Ergebnis ist somit das Zweigrohr 6 bzw. 6' jeweils an dem Hauptrohr 5 vorbeigeführt und mündet in das Hauptrohr 5 auf der der jeweiligen Toilette 1 gegenüberliegenden Seite ein.

Ergänzend ist in der Zeichnung schematisch veranschaulicht, daß die Toiletten als Unterflurtoilette 1' ausgeführt sein können, indem das Zweigrohr 6' als Steigrohr 11 ausgeführt wird, welches die unter dem Niveau des Hauptrohres 5 liegende Toilette 1 mit dem Hauptrohr verbindet. Die Draufsicht auf die Toilette 1 in Überfluranordnung zeigt ferner, daß das Zweigrohr 6 oberhalb des Hauptrohres 5 an diesem vorbeigeführt ist, wodurch Rückströmeffekte reduziert werden. Des weiteren ist dargestellt, daß das Zweigrohr 6 zwischen dem Bogen 7 und der Einmündung in das Hauptrohr 5 durchaus noch einen geraden Abschnitt 12 umfassen kann.

## Patentansprüche

1. Vakuumtoilettensystem für ein Fahrzeug, insbesondere für ein Passagierflugzeug, umfassend eine Mehrzahl von Toiletten (1, 1'), einen Sammelbehälter (2), ein die Toiletten mit dem Sammelbehälter verbindendes Leitungsnetz (3) und einen strömungstechnisch mit dem Sammelbehälter verbundenen Vakuumgenerator (4), wobei das Leitungsnetz (3) mindestens ein Hauptrohr (5) und eine Mehrzahl von Zweigrohren (6, 6') umfaßt, über welche die Toiletten (1, 1') an das mindestens eine Hauptrohr (5) angeschlossen sind, die im spitzen Winkel mit einer in Förderrichtung (A) im Hauptrohr (5) gerichteten Komponente in das Hauptrohr einmünden und die benachbart ihrer jeweiligen Einmündung einen Bogen (7, 7') beschreiben,
**dadurch gekennzeichnet,**
**daß** der Krümmungsmittelpunkt (8, 8') der jeweiligen Mittellinie (9, 9') der gebogenen Abschnitte (7, 7') der Zweigrohre (6, 6') bezogen auf die Förderrichtung (A) im betreffenden Hauptrohr (5) hinter dem jeweiligen Einmündungspunkt (10, 10') der Mittellinie (9, 9') in das Hauptrohr (5) liegt.

2. Vakuumtoilettensystem nach Anspruch 1,
**dadurch gekennzeichnet,**
**daß** der gebogene Abschnitt (7, 7') der Zweigrohre (6, 6') mindestens 90° beträgt.

3. Vakuumtoilettensystem nach Anspruch 2,
**dadurch gekennzeichnet,**
**daß** der gebogene Abschnitt (7, 7') der Zweigrohre (6, 6') mindestens zwischen 90° und 165° beträgt.

4. Vakuumtoilettensystem nach einem der Ansprüche 1 bis 3,
**dadurch gekennzeichnet,**
**daß** zumindest ein Teil der Toiletten als Unterflurtoiletten (1') auf einem niedrigeren Niveau angeordnet ist als das Hauptrohr (5), wobei die Zweigrohre (6') einen Steigleitungsabschnitt (11) umfassen.

5. Vakuumtoilettensystem nach einem der Ansprüche 1 bis 3,
**dadurch gekennzeichnet,**
**daß** zumindest ein Teil der Toiletten als Überflurtoiletten (1) ausgebildet ist, wobei die Zweigrohre (6) über das Hauptrohr (5) hinweggeführt sind.

6. Vakuumtoilettensystem nach einem der Ansprüche 1 bis 5,
**dadurch gekennzeichnet,**
**daß** die Zweigrohre (6, 6') an dem Hauptrohr (5) vorbeigeführt sind und gegenüber der betreffenden Toilette (1) in das Hauptrohr einmünden.

## Claims

1. Vacuum toilet system for vehicles, in particular a passenger aircraft, comprising a number of toilets (1, 1'), a collecting tank (2), a pipe network (3) connecting to the collecting tank, and a vacuum generator (4) hydraulically connected to it, whereby the pipe network (3) has at least one main pipe (5) and a number of branch pipes (6, 6') through which the toilets (1, 1;) are connected to at least one main pipe (5), terminating with a component pointing in the delivery direction (A) at an acute angle in the main pipe (5) and describing a curvature (7, 7') in the vicinity of its respective termination, **characterised in that** the centre of the curvature (8, 8') of the respective centre line (9. 9') of the curved sections (7, 7') of the branch pipes (6, 6') is located past the respective point of termination (10, 10') of the centre line (9, 9') in the main pipe (5) in relation to the direction of delivery (A).

2. Vacuum toilet system as in Claim 1, **characterised in that** the curved section (7, 7') of the branch pipes (6, 6') describes at least 90°.

3. Vacuum toilet system according to Claim 2, **characterised in that** that the curved section (7, 7') of the branch pipes (6, 6') describes at least between 90° and 165°.

4. Vacuum toilet system according to one of the Claims 1 to 3, **characterised in that** at least some of the toilets are arranged as under-floor toilets (1') at a lower level than the main pipe (5), whereby the branch pipes (6') have a riser pipe section (11).

5. Vacuum toilet system according to one of the Claims 1 to 3, **characterised in that** atleast some of the toilets are arranged as above-ground toilets (1), whereby the branch pipes (6) are carried above the main pipe (5).

6. Vacuum toilet system according to one of the Claims 1 to 5, **characterised in that** the branch pipes (6, 6') are carried along the main pipe (5) and terminate in the main pipe opposite the respective toilet (1).

## Revendications

1. Système de toilettes à dépression pour un véhicule, en particulier pour un avion de transport de passagers, comprenant plusieurs toilettes (1, 1'), un réservoir de collecte (2), un réseau de conduites (3) reliant les toilettes au réservoir de collecte et un générateur de dépression (4) qui est connecté sur le plan de l'écoulement au réservoir de collecte, le système de conduites (3) comprenant au moins une conduite principale (5) et une pluralité de conduites de piquage (6, 6') par lesquelles les toilettes (1, 1') sont reliées à la conduite principale (5), au nombre d'au moins une, et qui débouchent dans ladite conduite principale (5) suivant un angle aigu, avec une composante orientée dans la direction de transport (A) et décrivent une courbe (7, 7') dans le voisinage de leur embouchure,
**caractérisé en ce que** le centre de courbure (8, 8') de l'axe médian (9, 9') du tronçon courbe (7, 7') considéré des conduites de piquage (6, 6'), par rapport à la direction de transport (A) dans la conduite principale (5) considérée, est situé derrière le point de débouché (10, 10') de l'axe médain (9, 9') dans la conduite principale (5).

2. Système de toilettes à dépression selon la revendication 1, **caractérisé en ce que** le tronçon courbe (7, 7') des conduites de piquage (6, 6') est d'au moins 90°.

3. Système de toilettes à dépression selon la revendication 2, **caractérisé en ce que** le tronçon courbe (7, 7') des conduites de piquage (6, 6') est au moins compris entre 90° et 165°.

4. Système de toilettes à dépression selon une des revendications 1 à 3, **caractérisé en ce qu'**au moins une partie des toilettes (1') sont disposées à un niveau plus bas que la conduite principale (5) et les conduites de piquage (6') comprennent un tronçon de conduite (11) montante.

5. Système de toilettes à dépression selon une des revendications 1 à 3, **caractérisé en ce qu'**au moins une partie des toilettes (1) sont disposées à un niveau plus élevé que la conduite principale et les tronçons de piquage (6) sont amenés au-delà de la conduite principale (5).

6. Système de toilettes à dépression selon une des revendications 1 à 5, **caractérisé en ce que** les conduites de piquage (6, 6') s'étendent au-delà de la conduite principale (5) et débouchent dans ladite conduite principale (5) à l'opposé de la toilette (1) concernée.
